# EUROPÄISCHE PATENTSCHRIFT

(11) **EP 3 700 761 B1**
(45) Veröffentlichungstag und Bekanntmachung des Hinweises auf die Patenterteilung: **22.09.2021**
(21) Anmeldenummer: 18742973.3
(22) Anmeldetag: 12.07.2018
(51) Int. Cl.: B60C 11/16

(54) **FAHRZEUGLUFTREIFEN MIT EINEM PROFILIERTEN LAUFSTREIFEN MIT SPIKES**
PNEUMATIC VEHICLE TYRES HAVING A PROFILED TREAD WITH STUDS
PNEUMATIQUE DE VÉHICULE AUTOMOBILE ÉQUIPÉ DE BANDE DE ROULEMENT PROFILÉE À CRAMPONS

(30) Priorität: 25.10.2017 DE 102017219036
(43) Veröffentlichungstag der Anmeldung: 02.09.2020
(73) Patentinhaber: Continental Reifen Deutschland GmbH, 30165 Hannover (DE)
(72) Erfinder: SCHLITTENHARD, Jan, 30419 Hannover (DE); KÖTTER, Maik, 30419 Hannover (DE); SPECHTMEYER, Torben, 30419 Hannover (DE); WIESE, Klaus, 30419 Hannover (DE)
(74) Vertreter: Continental Corporation
(86) Internationale Anmeldenummer: PCT/EP2018/068914
(87) Internationale Veröffentlichungsnummer: WO 2019/081080

(56) Entgegenhaltungen:
- EP-A1- 1 199 193
- JP-A- 2012 176 700

## Beschreibung

Die Erfindung betrifft einen Fahrzeugluftreifen mit einem profilierten Laufstreifen mit Spikes, welche in über den Umfang des Laufstreifens umlaufenden Spikespuren angeordnet sind, wobei jeder Spike einen im Gummimaterial des Laufstreifens verankerten Spikekörper und einen über die Laufstreifenperipherie vorstehenden Spikepin aufweist, wobei im Laufstreifen Spikes eines ersten Typs und Spikes eines zweiten Typs verankert sind, welche sich in der Ausgestaltung ihrer Spikekörper voneinander unterscheiden, wobei die Spikekörper jeweils einen Fußflansch und einen Oberflansch aufweisen und eine ihren Schwerpunkt enthaltende zentrale Hochachse aufweisen, und wobei die Spikes des ersten Typs vorzugsweise in seitlichen Bereichen des Laufstreifens und die Spikes des zweiten Typs vorzugsweise im mittleren Laufstreifenbereich positioniert sind.

Ein Fahrzeugluftreifen der eingangs genannten Art ist aus der JP 2012 176700 A bekannt. Um die Lenkstabilität des Fahrzeuges mit Spikereifen zu verbessern, wird in dieser Druckschrift vorgeschlagen, in den Seitenbereichen des Laufstreifens Spikes vorzusehen, deren Spikekörper in Draufsicht eine längliche, ovale Gestalt aufweist, wobei die Spikes derart im Laufstreifen positioniert sind, dass ihre längere Erstreckung in der Umfangsrichtung des Laufstreifens vorliegt. In den an die Seitenbereiche unmittelbar anschließenden Bereichen des Laufstreifens sind beispielsweise Spikes mit kreiszylindrisch ausgeführten Spikekörpern vorgesehen.

Aus der FI 126308 B ist es bekannt, im mittleren Umfangsbereich eines Laufstreifens Spikes mit Spikepins zu verankern, welche eine bessere Brems- und Traktionskraftübertragung bewirken als jene Spikes, welche in den schulterseitigen Umfangsbereichen verankert sind. Die in ihren Eigenschaften unterschiedlichen Spikes unterscheiden sich hinsichtlich des Querschnittes ihrer Spikepins, wobei die im mittleren Umfangsbereich verankerten Spikes Spikepins mit einer kleineren Querschnittsfläche aufweisen, als die Spikes in den schulterseitigen Umfangsbereichen.

Aus der EP 1 199 193 A1 ist ein Spike für die Lauffläche eines Fahrzeugreifens, insbesondere eines Winterreifens, mit einem in der Draufsicht unrunden, länglichen, plattenförmigen Spikefuß, dessen größte Erstreckung eine Längsachse definiert, und mit einem in der Draufsicht unrunden, länglichen Spikeoberteil, dessen größte Erstreckung ebenfalls eine Längsachse definiert, bekannt. Um noch größere Kräfte vom Untergrund aufnehmen zu können, wird vorgeschlagen, dass Spikefuß und Spikeoberteil gegeneinander verschränkt sind, so dass die Längsachse des Spikefußes mit der Längsachse des Spikeoberteils einen von Null abweichenden Winkel einschließt.

Es ist bekannt, dass beim Abrollen eines Fahrzeugluftreifens auf dem Untergrund der Reifen abplattet, wobei in den Seitenbereichen des Laufstreifens und im mittleren Bereich des Laufstreifens unterschiedliche Schlupfbewegungen stattfinden. In den Schulterbereichen schlupfen die Profilpositive, beispielsweise Profilblöcke, durch den Latsch bei Geradeausfahrt und leichten Schräglaufwinkeln hauptsächlich in Richtung zur Laufstreifenmitte, die Profilpositive, beispielsweise Profilblöcke, im mittleren Laufstreifenbereich hauptsächlich in Umfangsrichtung. Die bislang bekannten Spikes können diese unterschiedlichen Schlupfbewegungen beim Kontakt des Laufstreifens mit der Bodenaufstandsfläche nicht berücksichtigen bzw. auch nicht ausnützen.

Der Erfindung liegt daher die Aufgabe zugrunde, das Konzept der Verwendung von zwei unterschiedlich gestalteten Spiketypen im Laufstreifen eines Fahrzeugluftreifens optimal an die unterschiedlichen Schlupfbewegungen der Profilpositive bzw. Profilblöcke anzupassen, um Kippbewegungen der Spikes, die sich nachteilig auf den Eisgriff auswirken können, zu verhindern.

Gelöst wird die gestellte Aufgabe erfindungsgemäß dadurch, dass der Oberflansch der Spikes des ersten Typs eine einzige, durch seine Hochachse gehende und zur axialer Richtung unter einem Winkel < 45° verlaufende Symmetrieebene und der Oberflansch der Spikes des zweiten Typs eine einzige, durch seine Hochachse gehende und zur Umfangsrichtung unter einem Winkel < 45° verlaufende Symmetrieebene aufweist, wobei die Oberflansche entlang der Symmetrieebenen und von der Hochachse aus ermittelt jeweils unterschiedlich große Erstreckungen aufweisen.

Für eine optimale Eisperformance ist es sinnvoll, die Spikes für kleine Schlupfbewegungen, die beim Abrollen des Reifens durch Abplattbewegungen der Profilpositive entstehen, weich zu betten. Bei großen Schlupfbewegungen, die bei Traktion, beim Bremsen oder bei Kurvenfahrt auftreten, sollen die Spikes steif gebettet sein. Dabei ist auch die Oberflanschgeometrie für die Spikehaltung und die vertikale Steifigkeit des Spikes verantwortlich. Bei den schulterseitig, in den Seitenbereichen des Laufstreifens positionierten Spikes treten beim Abrollen des Reifens die meisten Schlupfbewegungen zur Reifenmitte hin auf, das heißt die Spikes werden in Richtung zur Außenseite des Laufstreifens verkippt. Durch die Gestaltung des Oberflansches sind die diesbezüglich insbesondere in den seitlichen Bereichen des Laufstreifens vorgesehenen Spikes des ersten Typs in dieser Richtung weich gebettet. Bei den Spikes des zweiten Typs, die insbesondere im mittleren Laufstreifenbereich verankert sind, ist eine steifere Einbettung der Spikes entgegen der Verkipprichtung wesentlich, um ein sicheres Eindringen der Spikepins ins Eis sicherzustellen. Dieser Effekt wird durch die spezielle Ausgestaltung des Oberflansches relativ zur Umfangsrichtung erreicht, da die den Spike umgebende Gummimatrix in dieser Richtung besonders stark vorgespannt wird und somit starke Gegenkräfte gegen ein Verkippen bei Traktion und beim Bremsen aufgebaut werden können.

Gemäß einer bevorzugten Ausführung wird die weichere Bettung des Spikes des ersten Typs in die erwähnte Verkipprichtung dadurch unterstützt, dass der Oberflansch des Spikes dieses Typs entlang seiner Symmetrieebene seine größte Breite aufweist, die kleiner ist als seine größte Länge, die entlang einer zweiten zur Symmetrieebene und durch die Hochachse verlaufenden Ebene vorliegt.

Die steifere Einbettung der Spikes des zweiten Typs entgegen der erwähnten Verkipprichtung wird dadurch unterstützt, dass der Oberflansch des Spikes des zweiten Typs entlang seiner Symmetrieebene seine größte Länge aufweist, die größer ist als seine größte Breite, die entlang einer zweiten senkrecht zur Symmetrieebene und durch die Hochachse verlaufenden Ebene vorliegt.

Für die erwünschte Einbettung der Spikes ist es auch vorteilhaft, wenn die Symmetrieebenen der Oberflansche der Spikes des ersten und des zweiten Typs gleichzeitig die einzigen Symmetrieebenen der jeweiligen Fußflansche sind und wenn vorzugsweise bei den Spikepins beider Typen der Spikepin mittig im Oberflansch positioniert ist und in Draufsicht auf den Spike langgestreckt ist, wobei der Spikepin bei Spikes des ersten Typs in Richtung der Symmetrieebene und bei Spikes des zweiten Typs senkrecht zur Symmetrieebene langgestreckt ist.

Wie oben erwähnt, weisen die Oberflansche der Spikes des ersten und des zweiten Typs entlang der Symmetrieebenen und von der Hochachse aus ermittelt jeweils unterschiedlich große Erstreckungen auf. Bevorzugt entsprechen bei einem Spike des ersten Typs den unterschiedlich großen Erstreckungen des Oberflansches unterschiedlich große Abstände zwischen der im rechten Winkel zur Symmetrieebene und durch die Hochachse gehenden Ebene und den beiden äußersten Randstellen des Oberflansches, wobei der größere Abstand vorzugsweise um 0,1 mm bis 0,3 mm größer ist als der kleinere Abstand und wobei insbesondere der kleinere Abstand 2,6 mm bis 2,8 mm beträgt.

Bei einem Spike des zweiten Typs entsprechen den unterschiedlich großen Erstreckungen des Oberflansches vorzugsweise unterschiedlich große Abstände zwischen der im rechten Winkel zur Symmetrieebene und durch die Hochachse gehenden Ebene und den beiden äußersten Randstellen des Oberflansches, wobei der größere Abstand vorzugsweise um 0,6 mm bis 0,9 mm größer ist als der kleinere Abstand, welcher insbesondere 2,9 mm bis 3,2 mm beträgt.

Besonders vorteilhaft für die auf den eingebetteten Spike wirkenden Kräfte beim Bremsen und bei Traktion ist es, wenn sowohl die Spikes des ersten Typs als auch die Spikes des zweiten Typs Fußflansche aufweisen, welche entlang der Symmetrieebenen und von der Hochachse aus ermittelt jeweils unterschiedlich große Erstreckungen besitzen.

Besonders vorteilhaft ist eine Ausführung, bei der bei einem Spike des ersten Typs ausgehend von der im rechten Winkel zur Symmetrieebene und durch die Hochachse gehenden Ebene der in der Symmetrieebene ermittelte Abstand zu der einen äußersten Randstelle des Fußflansches größer ist als der Abstand zur anderen gegenüberliegenden äußersten Randstelle des Fußflansches, wobei der größere Abstand vorzugsweise um 1,5 mm bis 2,0 mm größer ist als der kleinere Abstand, welcher insbesondere 3,2 mm bis 3,5 mm beträgt.

Ebenfalls bevorzugt ist eine Ausführung, bei der bei einem Spike des zweiten Typs ausgehend von der im rechten Winkel zur Symmetrieebene durch die Hochachse gehenden Ebene der in der Symmetrieebene vorliegende Abstand zur einen äußersten Randstelle des Fußflansches größer ist als der Abstand zur gegenüberliegenden äußersten Randstelle des Fußflansches, wobei der größere Abstand vorzugsweise um 0,8 mm bis 1,2 mm größer ist als der kleinere Abstand, welcher insbesondere 3,1 mm bis 3,4 mm beträgt.

Die erwünschte weiche Bettung der Spikes des ersten Typs und die erwünschte steife Bettung der Spikes des zweiten Typs wird des Weiteren dadurch vorteilhaft beeinflusst, wenn sowohl bei Spikes des ersten als auch jenen des zweiten Typs die kleineren Abstände und die größeren Abstände jeweils zu den in denselben Richtungen befindlichen Randstellen des Oberflansches und des Fußflansches vorliegen.

Für die bevorzugte weiche Bettung in Verkipprichtung der Spikes des ersten Typs ist es vorteilhaft, wenn diese Spikes derart im Laufstreifen verankert sind, dass sich die kleineren Abstände näher beim Laufstreifenrand befinden.

Was die Spikes des zweiten Typs betrifft gibt es eine bevorzugte Anordnung für drehrichtungsgebunden ausgeführte Laufstreifen und für nicht drehrichtungsgebunden ausgeführte Laufstreifen. Bei einem Fahrzeugluftreifen mit einem drehrichtungsgebunden gestalteten Laufstreifen ist es vorteilhaft, wenn die Spikes des zweiten Typs derart im Laufstreifen verankert sind, dass ihre Oberflansche mit den größeren Abständen gegen die Abrollrichtung bei Vorwärtsfahrt orientiert sind, bei Fahrzeugluftreifen mit nicht drehrichtungsgebunden ausgestalteten Laufstreifen ist es besonders vorteilhaft, wenn die Spikes des zweiten Typs derart im Laufstreifen verankert sind, dass etwa die Hälfte der Spikes mit den größeren Abständen in die eine Umfangsrichtung und etwa die Hälfte der Spikes mit den größeren Abständen in die andere Umfangsrichtung orientiert sind.

Weitere Merkmale, Vorteile und Einzelheiten der Erfindung werden nun anhand der Zeichnung, die Ausführungsbeispiele darstellt, näher beschrieben. Dabei zeigen
Fig. 1 eine Schrägansicht eines Spikes eines ersten Typs,
Fig. 2 eine Seitenansicht des Spikes aus Fig. 1 in seiner axialen Erstreckung im Laufstreifen,
Fig. 3 eine Seitenansicht des Spikes aus Fig. 1 in seiner Umfangserstreckung im Laufstreifen,
Fig. 4 eine Draufsicht auf den Spike gemäß Fig. 1, wie im Laufstreifen positioniert,
Fig. 5 eine Schrägansicht eines Spikes eines zweiten Typs,
Fig. 6 eine Seitenansicht des Spikes aus Fig. 5 in seiner axialen Erstreckung im Laufstreifen,
Fig. 7 eine Seitenansicht des Spikes aus Fig. 5 in seiner Umfangserstreckung im Laufstreifen,
Fig. 8 eine Draufsicht auf den Spike gemäß Fig. 5, wie im Laufstreifen positioniert, und
Fig. 9 eine Draufsicht auf einen Umfangsabschnitt eines Laufstreifens eines Fahrzeugluftreifens mit einer Ausführungsvariante der Anordnung der Spikes.

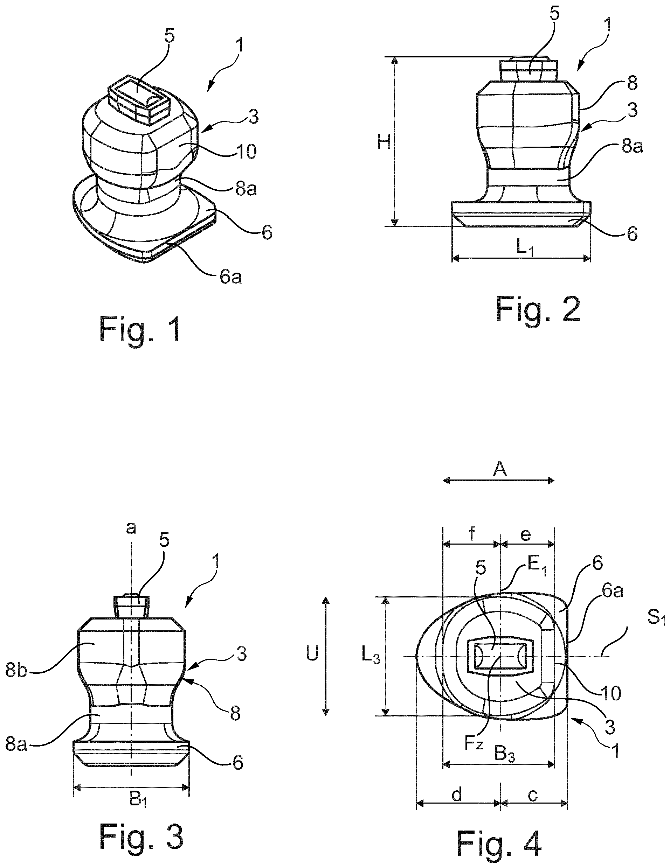

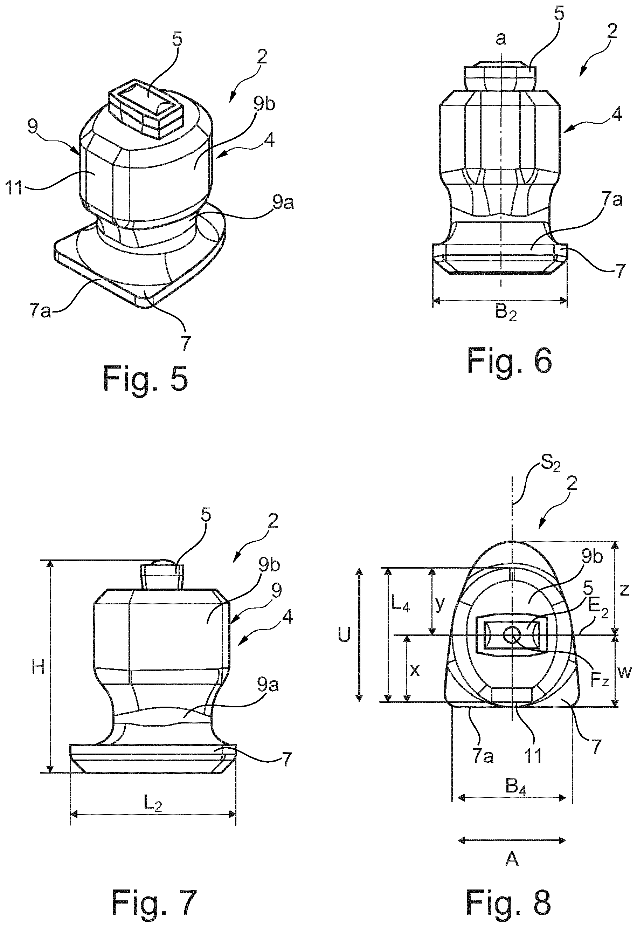

Die Erfindung befasst sich mit der Ausgestaltung von Spikes in zwei unterschiedlichen Typen und der bevorzugten Anordnung im Laufstreifens eines Fahrzeugluftreifens. Der eine, in den Figuren 1 bis 4 gezeigte Spike 1 des ersten Typs ist ein bevorzugt in den schulterseitigen bzw. seitlichen Laufstreifenbereichen anzuordnender Spike. Der in den Figuren 5 bis 8 dargestellte Spike 2 des zweiten Typs wird bevorzugt im mittleren Bereich eines Laufstreifens angeordnet.

Der Spike 1 und der Spike 2 weisen jeweils einen Spikekörper 3 (Spike 1), 4 (Spike 2) und einen in diesem verankerten Spikepin 5 auf. Jeder Spikekörper 3, 4 besteht aus einem Fußflansch 6, 7 und einem Oberflansch 8, 9. Sowohl der Oberflansch 8 als auch der Oberflansch 9 weisen jeweils eine einzige Symmetrieebene, welche beim Spike 1 des ersten Typs mit S₁ und beim Spike 2 des zweiten Typs mit S₂ bezeichnet ist, auf. Bei den gezeigten Ausführungen weisen ferner auch der Fußflansch 6 und der Fuß flansch 7, die in Draufsicht im Wesentlichen oder näherungsweise Ovale sind, die Symmetrieebenen S₁ bzw. S₂ als einzige Symmetrieebene auf. Bei alternativen Ausführungen sind der Fußflansch 6 und der Fußflansch 7 in Draufsicht Ovale mit zwei senkrecht zueinander verlaufenden Symmetrieebenen. Bei den gezeigten Ausführungen ist die Symmetrieebene S₁ bzw. S₂ jeweils auch eine Symmetrieebene des Spikepins 5. Die Spikekörper 3, 4 weisen vertikal verlaufende Hochachsen a (Fig. 3, Fig. 6) auf, auf welchen sich der nicht bezeichnete Schwerpunkt der Spikekörper 3, 4 befindet.

Wie die Figuren 2 und 3 sowie 6 und 7 zeigen, weisen die Fußflansche 6 und 7, bedingt durch ihre annähernd ovale Gestalt jeweils eine Länge L₁, L₂ und eine Breite B₁, B₂ auf, wobei L₁ > B₁ und L₂ > B₂. Jeder Fußflansch 6, 7 weist in seiner Längserstreckung einen schmäleren, gerundeten Endbereich auf und einen breiteren abgeflachten Endbereich mit einer gerade und im rechten Winkel zur Symmetrieebene S₁ bzw. S₂ verlaufenden Seitenfläche 6a, 7a. Wie Fig. 4 und Fig. 8 zeigen überragt bei beiden Spikes 1, 2 der gerundete Endbereich des Fußflansches 6, 7 den Oberflansch 8, 9, der abgeflachte Endbereich überragt den Oberflansch 8, 9 jedoch kaum oder gar nicht. Der Spikepin 5 ist mittig im Spikekörper 3, 4 positioniert, sein über den Spikekörper 3, 4 überstehender Abschnitt 5a ist in Draufsicht langgestreckt und im Wesentlichen viereckig, kann jedoch auch oval oder mit einer sonstigen langgestreckten Form ausgeführt sein. Beim Spike 1 des ersten Typs erstreckt sich der Spikepin 5 entlang der Symmetrieebene S₁, beim Spike 2 des zweiten Typs im rechten Winkel zur Symmetrieebene S₂.

Der Spike 1 des ersten Typs wird derart in den seitlichen Bereichen eines Laufstreifens positioniert, dass seine Symmetrieebene S₁ entweder parallel oder unter einem Winkel < 45°, vorzugsweise < 30°, zur axialen Richtung des Laufstreifens orientiert ist, der Spike 2 des zweiten Typs wird derart im mittleren Laufstreifenbereich eingesetzt, dass seine Symmetrieebene S₂ parallel oder unter einem Winkel < 45°, vorzugsweise < 30°, zur Umfangsrichtung verläuft. In den Figuren 4 und 8 zeigt jeweils der Doppelpfeil U die Umfangsrichtung, der Doppelpfeil A die axiale Richtung.

Der Oberflansch 8 des Spikes 1 des ersten Typs geht bei der gezeigten Ausführung über einen optional vorgesehenen taillierten Mittelteil 8a in den Fußflansch 6 über. Der Oberflansch 8 ist annähernd kreiszylindrisch gestaltet und erstreckt sich entlang der Hochachse a über mindestens 30 % der Spikekörperhöhe H. Der Oberflansch 8 weist ferner eine parallel zur Seitenfläche 6a des Fußflansches 6 verlaufende ebenfalls abgeflachte Seitenfläche 10 auf. Bei der bevorzugten Ausführung weist der Oberflansch 8 entlang der Symmetrieebene S₁ seine größte Breite B₃ auf, die kleiner ist als seine größte Länge L₃, die entlang einer zweiten senkrecht zur Symmetrieebene S₁ und durch die Hochachse a verlaufenden Ebene E₁ vorliegt. Die Breite B₃ beträgt insbesondere 5,4 mm bis 5,8 mm, die Länge L₃ ist um 0,2 mm bis 0,4 mm größer als die Breite B₃. Ausgehend von der Ebene E₁ sind parallel zur Symmetrieebene S₁ und in einer Ebene parallel zur Laufstreifenperipherie Abstände c, d, e und f vorhanden. Der Abstand c befindet sich zwischen der Ebene E₁ und der einen äußersten Randstelle des Fußflansches 6 und ist kleiner als der Abstand d zwischen der Ebene E₁ und der anderen äußersten Randstelle des Fußflansches 6. Insbesondere beträgt der Abstand c 3,2 mm bis 3,5 mm, der Abstand d ist um 1,5 mm bis 2,0 mm größer als c. Der Abstand e befindet sich zwischen der Ebene E₁ und der einen äußersten Randstelle des Oberflansches 8 und ist kleiner als der Abstand f zwischen der Ebene E₁ und der gegenüberliegenden äußersten Randstelle des Oberflansches 8. Insbesondere beträgt e 2,6 mm bis 2,8 mm, f ist um 0,1 mm bis 0,3 mm größer als e. Der Spike 1 wird vorzugsweise derart im Laufstreifen verankert, dass sich die jeweils kleineren Abstände e und c näher beim Laufstreifenrand befinden.

Der Oberflansch 9 des Spikes 2 des zweiten Typs geht bei der gezeigten Ausführung und optional ebenfalls über einen taillierten Mittelteil 9a in den Fußflansch 7 über. Der Oberflansch 9 ist in Draufsicht oval mit einer relativ kurzen abgeflachten Seitenfläche 11 parallel zur Seitenfläche 7a des Fußflansches 7. Die Orientierung des Ovals des Oberflansches 9 stimmt mit der Orientierung des Ovals des Fußflansches 7 überein. Der Oberflansch 9 weist entlang einer zweiten, senkrecht der Symmetrieebene S₁ und durch die Hochachse a gehenden Ebene E₂ seine größte Breite B₄ auf, die annähernd der Breite des Fußflansches 7 an dieser Stelle entspricht und 4,7 mm bis 5,1 mm beträgt. Die entlang der Symmetrieebene S₂ vorliegende größte Länge L₄ des Oberflansches 9 beträgt 5,9 mm bis 6,3 mm. Ausgehend von der Ebene E₂ liegen in einer Ebene parallel zur Laufstreifenperipherie Abstände x, y, z und w parallel zur Symmetrieebene S₂ vor. Der Abstand x befindet sich zwischen der einen äußersten Randstelle des Oberflansches 9 und der Ebene E₂ und ist kleiner als der Abstand y zwischen der Ebene E₁ und der gegenüberliegenden äußersten Randstelle des Oberflansches 9. Insbesondere beträgt der Abstand x 2,9 mm bis 3,2 mm, der Abstand y ist um 0,6 mm bis 0,9 mm größer als x. Der Abstand w befindet sich zwischen der Ebene E₂ und der einen äußersten Randstelle des Fußflansches 7 und ist kleiner als der Abstand z zwischen der Ebene E₂ und der gegenüberliegenden äußersten Randstelle des Fußflansches 7. Insbesondere beträgt der Abstand w 3,1 mm bis 3, 4 mm, der Abstand z ist um 0,8 mm bis 1,2 mm größer als der Abstand w.

Wie bereits erwähnt ist der Spike 1 des ersten Typs bevorzugt ein "Schulterspike", der insbesondere mit seiner Symmetrieebene S₁ in axialer Richtung verlaufend im Laufstreifen eingesetzt wird, wobei die abgeflachte Seitenfläche 6a des Fußflansches 6 in Richtung Laufstreifenrand zeigt. Spikes 2 des zweiten Typs sind bevorzugt "Centerspikes", welche mit ihrer Symmetrieebene S₂ vorzugsweise in Umfangsrichtung verlaufend im Laufstreifen verankert werden.

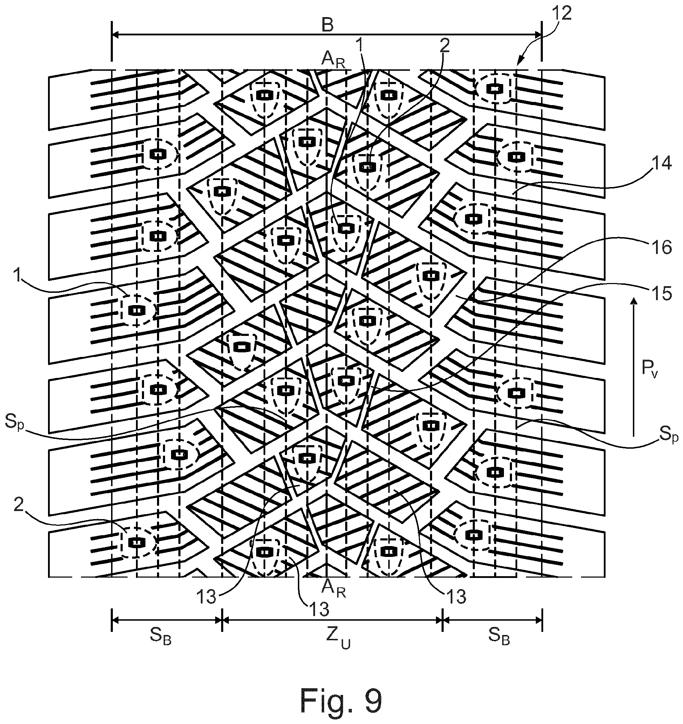

Fig. 9 zeigt schematisch einen Umfangsabschnitt eines Laufstreifens für einen PKW-Winterreifen mit einem drehrichtungsgebundenen Profil. Der beispielhaft gezeigte Laufstreifen weist zwei schulterseitige Profilblockreihen 12 auf, zwischen welchen weitere Profilblöcke 13 ausgebildet sind, welche durch V-förmig über die Breite des Laufstreifens verlaufende Querrillen 14 und eine Anzahl von Umfangsrillen 15 und Schrägrillen 16 gebildet sind. Die Drehrichtung bei Vorwärtsfahrt ist durch einen Pfeil Pᵥ gekennzeichnet. Mit B ist die Breite des bodenberührenden Teils des Laufstreifens gekennzeichnet. Innerhalb der Breite B sind die Spikes 1 und 2 in sogenannten Spikespuren Sₚ, deren Anzahl üblicherweise zwischen 4 und 25, insbesondere 12 und 20, beträgt, angeordnet. Spikespuren Sₚ sind parallel zur Umfangsrichtung bzw. zum Reifenäquator A_{R}-A_{R} kreisförmig umlaufende Linien und in Fig. 9 als gestrichelte Linien versinnbildlicht. Bei der in Fig. 9 gezeigten Ausführung sind pro Laufstreifenhälfte sieben Spikespuren Sₚ vorgesehen, deren Anordnung bezüglich des Reifenäquators A_{R}-A_{R} symmetrisch erfolgt.

In einem zentralen Umfangsbereich Zu des Laufstreifens, welcher symmetrisch zum Reifenäquator A-A über 30 % bis 60 % der Breite B verläuft, befinden sich bei der gezeigten Ausführung acht Spikespuren Sₚ in den an den Laufstreifenrand anschließenden, jeweils über 15 % bis 20 % der Breite B verlaufenden seitlichen Umfangsbereichen S_{B} befinden sich jeweils drei Spikespuren Sₚ. Die Gesamtanzahl der Spikes 1, 2 pro Spikespur Sₚ über den Umfang des Reifens beträgt 4 bis 25, insbesondere 7 bis 16. Bei der gezeigten Ausführung sind in den beiden seitlichen Umfangsbereichen S_{B} in den Spikespuren Sₚ ausschließlich Spikes 1 des ersten Typs, in den Spikespuren Sₚ im zentralen Umfangsbereich Z_{U} ausschließlich Spikes 2 des zweiten Typs positioniert. In einem drehrichtungsgebunden gestalteten Laufstreifen werden die "Centerspikes" 2 mit gleicher Orientierung ihrer Oberflansche und wie in Fig. 3 gezeigt positioniert, demnach mit den größeren Abständen y und z gegen die Abrollrichtung bei Vorwärtsfahrt, in einem nicht drehrichtungsgebunden gestalteten Laufstreifen vorzugsweise jeweils etwa zur Hälfte mit einer entsprechenden Orientierung in jede der Umfangsrichtungen.

### Bezugsziffernliste

- 1....................: Spike des ersten Typs
- 2....................: Spike des zweiten Typs
- 3, 4................: Spikekörper
- 5......................: Spikepin
- 6, 7 ..................: Fußflansch
- 6a, 7a...............: Seitenfläche
- 8, 9 ..................: Oberflansch
- 8a, 9a...............: Mittelteil
- 10, 11 ..............: Seitenfläche
- 12 ....................: Profilblockreihe
- 13 ....................: Profilblock
- 14 ....................: Querrille
- 15 ....................: Umfangsrille
- 16 ....................: Schrägrille
- A .....................: axiale Richtung
- B₁, B₂, B₃, B₄ ...: Breite
- c, d, e, f............: Abstand
- x, y, z, w..........: Abstand
- E₁, E₂,..............: Ebene
- H .....................: Spikekörperhöhe
- h ......................: Hochachse
- L₁, L₂, L₃, L₄....: Länge
- Pᵥ.....................: Pfeil Vorwärtsfahrt
- S_{B} ....................: seitlicher Umfangsbereich
- Sₚ.....................: Spikespuren
- S₁, S₂ ...............: Symmetrieebene
- F_{Z} ....................: Flächenschwerpunkt
- U .....................: Umfangsrichtung
- A_{R}-A_{R}..............: Reifenäquator
- Z_{U}....................: zentraler Umfangsbereich

## Patentansprüche

1. Fahrzeugluftreifen mit einem profilierten Laufstreifen mit Spikes (1, 2), welche in über den Umfang des Laufstreifens umlaufenden Spikespuren (S_{P}) angeordnet sind, wobei jeder Spike (1, 2) einen im Gummimaterial des Laufstreifens verankerten Spikekörper (3, 4) und einen über die Laufstreifenperipherie vorstehenden Spikepin (5) aufweist, wobei im Laufstreifen Spikes (1) eines ersten Typs und Spikes (2) eines zweiten Typs verankert sind, welche sich in der Ausgestaltung ihrer Spikekörper (3, 4) voneinander unterscheiden, wobei die Spikekörper (3, 4) jeweils einen Fußflansch (6, 7) und einen Oberflansch (8, 9) aufweisen und eine ihren Schwerpunkt enthaltende zentrale Hochachse (a) aufweisen, und wobei die Spikes (1) des ersten Typs vorzugsweise in seitlichen Bereichen des Laufstreifens und die Spikes (2) des zweiten Typs vorzugsweise im mittleren Laufstreifenbereich positioniert sind,
**dadurch gekennzeichnet,**
**dass** der Oberflansch (8) der Spikes (1) des ersten Typs eine einzige, durch seine Hochachse (a) gehende und zur axialen Richtung unter einem Winkel < 45° verlaufende Symmetrieebene (S₁) und der Oberflansch (9) der Spikes (1') des zweiten Typs eine einzige, durch seine Hochachse (a) gehende und zur Umfangsrichtung unter einem Winkel < 45° verlaufende Symmetrieebene (S₂) aufweist, wobei die Oberflansche (8, 9) entlang der Symmetrieebenen (S₁, S₂) und von der Hochachse (a) aus ermittelt jeweils unterschiedlich große Erstreckungen aufweisen.

2. Fahrzeugluftreifen nach Anspruch 1, **dadurch gekennzeichnet, dass** der Oberflansch (8) des Spikes (1) des ersten Typs entlang seiner Symmetrieebene (S₁) seine größte Breite (B₃) aufweist, die kleiner ist als seine größte Länge (L₃), die entlang einer zweiten senkrecht zur Symmetrieebene (S₁) und durch die Hochachse (a) verlaufenden Ebene (E₁) vorliegt.

3. Fahrzeugluftreifen nach Anspruch 1, **dadurch gekennzeichnet, dass** der Oberflansch (9) des Spikes (2) des zweiten Typs entlang seiner Symmetrieebene (S₂) seine größte Länge (L₄) aufweist, die größer ist als seine größte Breite (B₄), die entlang einer zweiten senkrecht zur Symmetrieebene (S₂) und durch die Hochachse (a) verlaufenden Ebene (E₂) vorliegt.

4. Fahrzeugluftreifen nach einem der Ansprüche 1 bis 3, **dadurch gekennzeichnet, dass** die Symmetrieebenen (S₁, S₂) der Oberflansche (8, 9) der Spikes (1, 2) des ersten und des zweiten Typs gleichzeitig die einzigen Symmetrieebenen des jeweiligen Fußflansches (6, 7) sind.

5. Fahrzeugluftreifen nach einem der Ansprüche 1 bis 4, **dadurch gekennzeichnet, dass** bei den Spikes (1, 2) beider Typen der Spikepin (5) mittig im Oberflansch (8, 9) positioniert ist und in Draufsicht auf den Spike (1, 1') langgestreckt ist, wobei der Spikepin (5) bei Spikes (1) des ersten Typs in Richtung der Symmetrieebene (S₁), bei Spikes (2) des zweiten Typs senkrecht zur Symmetrieebene (S₂) langgestreckt ist.

6. Fahrzeugluftreifen nach einem der Ansprüche 1 bis 5, **dadurch gekennzeichnet, dass** bei einem Spike (1) des ersten Typs den unterschiedlich großen Erstreckungen des Oberflansches (8) unterschiedlich große Abstände (e, f) zwischen der im rechten Winkel zur Symmetrieebene (S₁) und durch die Hochachse (a) gehenden Ebene (E₁) und den beiden äußersten Randstellen des Oberflansches (8) entsprechen, wobei der größere Abstand (f) vorzugsweise um 0,1 mm bis 0,3 mm größer ist als der kleinere Abstand (e).

7. Fahrzeugluftreifen nach Anspruch 6, **dadurch gekennzeichnet, dass** der kleinere Abstand (e) 2,6 mm bis 2,8 mm beträgt.

8. Fahrzeugluftreifen nach einen der Ansprüche 1 bis 5, **dadurch gekennzeichnet, dass** bei einem Spike (1) des ersten Typs ausgehend von der im rechten Winkel zur Symmetrieebene (S₁) und durch die Hochachse (a) gehenden Ebene (E₁) der in der Symmetrieebene (S₁) ermittelte Abstand (d) zu der einen äußersten Randstelle des Fußflansches (6) größer ist als der Abstand (c) zur anderen gegenüberliegenden äußersten Randstelle des Fußflansches (6), wobei der größere Abstand (d) vorzugsweise um 1,5 mm bis 2,0 mm größer ist als der kleinere Abstand (c).

9. Fahrzeugluftreifen nach Anspruch 8, **dadurch gekennzeichnet, dass** der kleinere Abstand (c) 3,2 mm bis 3,5 mm beträgt

10. Fahrzeugluftreifen nach einem der Ansprüche 1 bis 5, **dadurch gekennzeichnet, dass** bei einem Spike (2) des zweiten Typs den unterschiedlich großen Erstreckungen des Oberflansches (8) unterschiedlich große Abstände (x, y) zwischen der im rechten Winkel zur Symmetrieebene (S₂) und durch die Hochachse (a) gehenden Ebene (E₂) und den beiden äußersten Randstellen des Oberflansches (9) entsprechen, wobei der größere Abstand (x) vorzugsweise um 0,6 mm bis 0,9 mm größer ist als der kleinere Abstand (y).

11. Fahrzeugluftreifen nach Anspruch 10, **dadurch gekennzeichnet, dass** der kleinere Abstand (x) 2,9 mm bis 3,2 mm beträgt.

12. Fahrzeugluftreifen nach einem der Ansprüche 1 bis 5, **dadurch gekennzeichnet, dass** bei einem Spike (2) des zweiten Typs ausgehend von der im rechten Winkel zur Symmetrieebene (S₂) durch die Hochachse (a) gehenden Ebene (E₂) der in der Symmetrieebene (S₂) vorliegende Abstand (z) zur einen äußersten Randstelle des Fußflansches (7) größer ist als der Abstand (w) zur gegenüberliegenden äußersten Randstelle des Fußflansches (7), wobei der größere Abstand (z) vorzugsweise um 0,8 mm bis 1,2 mm größer ist als der kleinere Abstand (w).

13. Fahrzeugluftreifen nach Anspruch 12, **dadurch gekennzeichnet, dass** der kleinere Abstand (w) 3,1 mm bis 3,4 mm beträgt.

14. Fahrzeugluftreifen nach einem der Ansprüche 1 bis 13, **dadurch gekennzeichnet, dass** sowohl bei Spikes (1, 2) des ersten als auch des zweiten Typs die kleineren Abstände (c, e, w, x) und die größeren Abstände (d, f, y, z) jeweils zu den in denselben Richtungen befindlichen Randstellen des Ober- und des Fußflansches (8, 9; 6, 7) vorliegen.

15. Fahrzeugluftreifen nach einem der Ansprüche 1 bis 14, **dadurch gekennzeichnet, dass** die Spikes (1) des ersten Typs derart im Laufstreifen verankert sind, dass sich die kleineren Abstände (c, e, w, x) näher beim Laufstreifenrand befinden.

16. Fahrzeugluftreifen mit einem drehrichtungsgebunden ausgeführten Laufstreifen, nach einem der Ansprüche 1 bis 14, **dadurch gekennzeichnet, dass** die Spikes (2) des zweiten Typs derart im Laufstreifen verankert sind, dass ihre Oberflansche (9) mit den größeren Abständen (y, z) gegen die Abrollrichtung bei Vorwärtsfahrt orientiert sind.

17. Fahrzeugluftreifen mit einem nicht drehrichtungsgebunden ausgeführten Laufstreifen, nach einem der Ansprüche 1 bis 14, **dadurch gekennzeichnet, dass** die Spikes (2) des zweiten Typs derart im Laufstreifen verankert sind, dass etwa die Hälfte der Spikes (2) mit den größeren Abständen (y, z) in die eine Umfangsrichtung und etwa die Hälfte der Spikes (2) mit den größeren Abständen (y, z) in die andere Umfangsrichtung orientiert sind.

## Claims

1. Pneumatic vehicle tyre having a profiled tread with studs (1, 2), which are arranged in stud tracks (S_{P}) running around the circumference of the tread, wherein each stud (1, 2) has a stud body (3, 4) anchored in the rubber material of the tread and a stud pin (5) protruding beyond the periphery of the tread, wherein studs (1) of a first type and studs (2) of a second type are anchored in the tread, which differ from one another in terms of the configuration of their stud bodies (3, 4), wherein the stud bodies (3, 4) each have a bottom flange (6, 7) and a top flange (8, 9) and a central vertical axis (a) including their centre of gravity, and wherein the studs (1) of the first type are positioned preferably in lateral regions of the tread and the studs (2) of the second type are positioned preferably in the central tread region,
**characterized**
**in that** the top flange (8) of the studs (1) of the first type has a single plane of symmetry (S₁) extending through its vertical axis (a) and running at an angle of < 45° with respect to the axial direction, and the top flange (9) of the studs (1') of the second type has a single plane of symmetry (S₂) extending through its vertical axis (a) and running at an angle of < 45° with respect to the circumferential direction, wherein the top flanges (8, 9) each have different extents determined along the planes of symmetry (S₁, S₂) and starting from the vertical axis (a).

2. Pneumatic vehicle tyre according to Claim 1, **characterized in that** the top flange (8) of the stud (1) of the first type has its greatest width (B₃) along its plane of symmetry (S₁), which is less than its greatest length (L₃), which is along a second plane (E₁) extending perpendicularly to the plane of symmetry (S₁) and through the vertical axis (a).

3. Pneumatic vehicle tyre according to Claim 1, **characterized in that** the top flange (9) of the stud (2) of the second type has its greatest length (L₄) along its plane of symmetry (S₂), which is greater than its greatest width (B₄), which is along a second plane (E₂) extending perpendicularly to the plane of symmetry (S₂) and through the vertical axis (a).

4. Pneumatic vehicle tyre according to any of Claims 1 to 3, **characterized in that** the planes of symmetry (S₁, S₂) of the top flanges (8, 9) of the studs (1, 2) of the first and of the second type are simultaneously the only planes of symmetry of the respective bottom flange (6, 7) .

5. Pneumatic vehicle tyre according to any of Claims 1 to 4, **characterized in that**, in the case of the studs (1, 2) of both types, the stud pin (5) is positioned centrally in the top flange (8, 9) and is elongate in a plan view of the stud (1, 1'), wherein the stud pin (5) in the case of studs (1) of the first type is elongate in the direction of the plane of symmetry (S₁), and, in the case of studs (2) of the second type, it is elongate perpendicularly to the plane of symmetry (S₂).

6. Pneumatic vehicle tyre according to any of Claims 1 to 5, **characterized in that**, in the case of a stud (1) of the first type, different distances (e, f) between the plane (E₁) situated at right angles to the plane of symmetry (S₁) and passing through the vertical axis (a) and the two outermost edge locations of the top flange (8) correspond to the different extents of the top flange (8), wherein the greater distance (f) is preferably 0.1 mm to 0.3 mm greater than the smaller distance (e).

7. Pneumatic vehicle tyre according to Claim 6, **characterized in that** the smaller distance (e) is 2.6 mm to 2.8 mm.

8. Pneumatic vehicle tyre according to any of Claims 1 to 5, **characterized in that**, in the case of a stud (1) of the first type and starting from the plane (E₁) situated at right angles to the plane of symmetry (S₁) and passing through the vertical axis (a), the distance (d), determined in the plane of symmetry (S₁), from one outermost edge location of the bottom flange (6) is greater than the distance (c) from the other, opposite outermost edge location of the bottom flange (6), wherein the greater distance (d) is preferably 1.5 mm to 2.0 mm greater than the smaller distance (c).

9. Pneumatic vehicle tyre according to Claim 8, **characterized in that** the smaller distance (c) is 3.2 mm to 3.5 mm.

10. Pneumatic vehicle tyre according to any of Claims 1 to 5, **characterized in that**, in the case of a stud (2) of the second type, different distances (x, y) between the plane (E₂) situated at right angles to the plane of symmetry (S₂) and passing through the vertical axis (a) and the two outermost edge locations of the top flange (9) correspond to the different extents of the top flange (8), wherein the greater distance (x) is preferably 0.6 mm to 0.9 mm greater than the smaller distance (y).

11. Pneumatic vehicle tyre according to Claim 10, **characterized in that** the smaller distance (x) is 2.9 mm to 3.2 mm.

12. Pneumatic vehicle tyre according to any of Claims 1 to 5, **characterized in that**, in the case of a stud (2) of the second type and starting from the plane (E₂) situated at right angles to the plane of symmetry (S₂) and passing through the vertical axis (a), the distance (z), present in the plane of symmetry (S₂), from one outermost edge location of the bottom flange (7) is greater than the distance (w) from the opposite outermost edge location of the bottom flange (7), wherein the greater distance (z) is preferably 0.8 mm to 1.2 mm greater than the smaller distance (w).

13. Pneumatic vehicle tyre according to Claim 12, **characterized in that** the smaller distance (w) is 3.1 mm to 3.4 mm.

14. Pneumatic vehicle tyre according to any of Claims 1 to 13, **characterized in that**, both in the case of studs (1, 2) of the first type and of the second type, the smaller distances (c, e, w, x) and the greater distances (d, f, y, z) each exist with respect to the edge locations of the top and bottom flange (8, 9; 6, 7) which are situated in the same directions.

15. Pneumatic vehicle tyre according to any of Claims 1 to 14, **characterized in that** the studs (1) of the first type are anchored in the tread in such a way that the smaller distances (c, e, w, x) are closer to the tread edge.

16. Pneumatic vehicle tyre with a directional tread, according to any of Claims 1 to 14, **characterized in that** the studs (2) of the second type are anchored in the tread in such a way that the top flanges (9) thereof with the larger distances (y, z) are oriented counter to the rolling direction in forward travel.

17. Pneumatic vehicle tyre with a non-directional tread, according to any of Claims 1 to 14, **characterized in that** the studs (2) of the second type are anchored in the tread in such a way that approximately half of the studs (2) with the larger distances (y, z) are oriented in one circumferential direction, and approximately half of the studs (2) with the larger distances (y, z) are oriented in the other circumferential direction.

## Revendications

1. Pneumatique de véhicule muni d'une bande de roulement profilée à crampons (1, 2), qui sont agencés dans des pistes de crampons (S_{P}) entourant circonférentiellement la bande de roulement, chaque crampon (1, 2) comprenant un corps de crampon (3, 4) ancré dans le matériau en caoutchouc de la bande de roulement et une pointe de crampon (5) dépassant de la périphérie de bande de roulement, des crampons (1) d'un premier type et des crampons (2) d'un deuxième type étant ancrés dans la bande de roulement, qui diffèrent l'un de l'autre dans la configuration de leurs corps de crampon (3, 4), les corps de crampon (3, 4) présentant chacun un flanc de pied (6, 7) et un flanc supérieur (8, 9) et présentant un axe vertical central (a) contenant leur centre de gravité, et les crampons (1) du premier type étant de préférence positionnés dans des zones latérales de la bande de roulement et les crampons (2) du deuxième type étant de préférence positionnés dans la zone médiane de la bande de roulement,
**caractérisé en ce que**
le flanc supérieur (8) des crampons (1) du premier type présente un plan de symétrie unique (S₁) passant à travers son axe vertical (a) et s'étendant à un angle de < 45° par rapport à la direction axiale, et le flanc supérieur (9) des crampons (1') du deuxième type présente un plan de symétrie unique (S₂) passant à travers son axe vertical (a) et s'étendant à un angle < 45° par rapport à la direction circonférentielle, les flancs supérieurs (8, 9) présentant respectivement des étendues de tailles différentes, déterminées le long des plans de symétrie (S₁, S₂) et à partir de l'axe vertical (a).

2. Pneumatique de véhicule selon la revendication 1, **caractérisé en ce que** le flanc supérieur (8) du crampon (1) du premier type présente le long de son plan de symétrie (S₁) sa plus grande largeur (B₃), qui est inférieure à sa plus grande longueur (L₃), qui est présente le long d'un deuxième plan (E₁) s'étendant perpendiculairement au plan de symétrie (S₁) et à travers l'axe vertical (a).

3. Pneumatique de véhicule selon la revendication 1, **caractérisé en ce que** le flanc supérieur (9) du crampon (2) du deuxième type présente le long de son plan de symétrie (S₂) sa plus grande longueur (L₄), qui est supérieure à sa plus grande largeur (B₄), qui est présente le long d'un deuxième plan (E₂) s'étendant perpendiculairement au plan de symétrie (S₂) et à travers l'axe vertical (a).

4. Pneumatique de véhicule selon l'une quelconque des revendications 1 à 3, **caractérisé en ce que** les plans de symétrie (S₁, S₂) des flancs supérieurs (8, 9) des crampons (1, 2) du premier et du deuxième type sont simultanément les plans de symétrie uniques du flanc de pied respectif (6, 7).

5. Pneumatique de véhicule selon l'une quelconque des revendications 1 à 4, **caractérisé en ce que**, dans les crampons (1, 2) des deux types, la pointe de crampon (5) est positionnée au milieu dans le flanc supérieur (8, 9) et est allongée en vue de dessus sur le crampon (1, 1'), la pointe de crampon (5) étant allongée dans les crampons (1) du premier type en direction du plan de symétrie (S₁), dans les crampons (2) du deuxième type perpendiculairement au plan de symétrie (S₂).

6. Pneumatique de véhicule selon l'une quelconque des revendications 1 à 5, **caractérisé en ce que**, dans un crampon (1) du premier type, les étendues de tailles différentes du flanc supérieur (8) correspondent à des distances (e, f) de tailles différentes entre le plan (E₁) passant à angle droit du plan de symétrie (S₁) et à travers l'axe vertical (a) et les deux points de bord les plus extérieurs du flanc supérieur (8), la plus grande distance (f) étant de préférence supérieure de 0,1 mm à 0,3 mm à la plus petite distance (e).

7. Pneumatique de véhicule selon la revendication 6, **caractérisé en ce que** la plus petite distance (e) est de 2,6 mm à 2,8 mm.

8. Pneumatique de véhicule selon l'une quelconque des revendications 1 à 5, **caractérisé en ce que**, dans un crampon (1) du premier type, à partir du plan (E₁) passant à angle droit du plan de symétrie (S₁) et à travers l'axe vertical (a), la distance (d) déterminée dans le plan de symétrie (S₁) jusqu'à un point de bord le plus extérieur du flanc de pied (6) est supérieure à la distance (c) jusqu'à l'autre point de bord le plus extérieur opposé du flanc de pied (6), la plus grande distance (d) étant de préférence supérieure de 1,5 mm à 2,0 mm à la plus petite distance (c).

9. Pneumatique de véhicule selon la revendication 8, **caractérisé en ce que** la plus petite distance (c) est de 3,2 mm à 3,5 mm.

10. Pneumatique de véhicule selon l'une quelconque des revendications 1 à 5, **caractérisé en ce que**, dans un crampon (2) du deuxième type, les étendues de tailles différentes du flanc supérieur (8) correspondent à des distances (x, y) de tailles différentes entre le plan (E₂) passant à angle droit du plan de symétrie (S₂) et à travers l'axe vertical (a) et les deux points de bord les plus extérieur du flanc supérieur (9), la plus grande distance (x) étant de préférence supérieure de 0,6 mm à 0,9 mm à la plus petite distance (y).

11. Pneumatique de véhicule selon la revendication 10, **caractérisé en ce que** la plus petite distance (x) est de 2,9 mm à 3,2 mm.

12. Pneumatique de véhicule selon l'une quelconque des revendications 1 à 5, **caractérisé en ce que**, dans un crampon (2) du deuxième type, à partir du plan (E₂) passant à angle droit du plan de symétrie (S₂) à travers l'axe vertical (a), la distance (z) présente dans le plan de symétrie (S₂) jusqu'à un point de bord le plus extérieur du flanc de pied (7) est supérieure à la distance (w) jusqu'au point de bord le plus extérieur opposé du flanc de pied (7), la plus grande distance (z) étant de préférence supérieure de 0,8 mm à 1,2 mm à la plus petite distance (w).

13. Pneumatique de véhicule selon la revendication 12, **caractérisé en ce que** la plus petite distance (w) est de 3,1 mm à 3,4 mm.

14. Pneumatique de véhicule selon l'une quelconque des revendications 1 à 13, **caractérisé en ce qu'**aussi bien dans les crampons (1, 2) du premier que du deuxième type, les plus petites distances (c, e, w, x) et les plus grandes distances (d, f, y, z) sont à chaque fois présentes jusqu'aux points de bord du flanc supérieur et de pied (8, 9 ; 6, 7) se trouvant dans les mêmes directions.

15. Pneumatique de véhicule selon l'une quelconque des revendications 1 à 14, **caractérisé en ce que** les crampons (1) du premier type sont ancrés dans la bande de roulement de telle sorte que les plus petites distances (c, e, w, x) se trouvent plus proches du bord de la bande de roulement.

16. Pneumatique de véhicule muni d'une bande de roulement réalisée de manière associée à la direction de rotation, selon l'une quelconque des revendications 1 à 14, **caractérisé en ce que** les crampons (2) du deuxième type sont ancrés dans la bande de roulement de telle sorte que leurs flancs supérieurs (9) sont orientés avec les plus grandes distances (y, z) à l'encontre de la direction de roulement en marche avant.

17. Pneumatique de véhicule muni d'une bande de roulement réalisée de manière non associée à la direction de rotation, selon l'une quelconque des revendications 1 à 14, **caractérisé en ce que** les crampons (2) du deuxième type sont ancrés dans la bande de roulement de telle sorte qu'environ la moitié des crampons (2) sont orientés avec les plus grandes distances (y, z) dans une direction circonférentielle et qu'environ la moitié des crampons (2) sont orientés avec les plus grandes distances (y, z) dans l'autre direction circonférentielle.
